Europäisches Patentamt

European Patent Office

Office européen des brevets

(19)

(11) Veröffentlichungsnummer: **0 112 972**

**A1**

(12) # EUROPÄISCHE PATENTANMELDUNG

(21) Anmeldenummer: **83109610.2**

(22) Anmeldetag: **27.09.83**

(51) Int. Cl.³: **G 06 K 11/06**
**G 06 F 3/03**

(30) Priorität: **25.11.82 DE 3243679**

(43) Veröffentlichungstag der Anmeldung:
**11.07.84 Patentblatt 84/28**

(84) Benannte Vertragsstaaten:
**AT BE CH FR GB IT LI NL SE**

(71) Anmelder: **PREH, Elektrofeinmechanische Werke Jakob Preh Nachf. GmbH & Co.**
**Postfach 1740 Schweinfurter Strasse 5**
**D-8740 Bad Neustadt/Saale(DE)**

(72) Erfinder: **Koch, Hans-Peter, Dipl.-Ing.**
**Wagstätter Strasse 35**
**D-8740 Bad Neustadt/Saale(DE)**

(72) Erfinder: **Limpert, Rudolf, Dipl.-Math.**
**Obertorstrasse 11**
**D-8741 Strahlungen(DE)**

(54) **Terminal einer Datenverarbeitungsanlage.**

(57) Ein Terminal (2) einer Datenverarbeitungsanlage mit Bildschirm (11) weist eine alphanumerische Tastatur (3) und eine Steuereinrichtung (15) für einen Cursor auf.

Um die Cursorverstellung schnell und sicher durchführen zukönnen, weist die Steuereinrichtung (15) eine Kontaktplatte (16) mit einer flächigen Widerstandsschicht (5) und einen Griffel (7) auf. Ein Wandler (25) digitalisiert mittels des Griffels (7) an der Widerstandsschicht (5) abgegriffene Teilspannungen. Bei Betätigung eines Schaltgliedes (26) erscheint der Cursor auf dem Bildschirm (11) an einer den digitalisierten Teilspannungen entsprechenden Stelle.

EP 0 112 972 A1

./...

Fig. 1

J P-22/82

Preh-Elektrofeinmechanische Werke,
Jakob Preh Nachf. GmbH & Co., 8740 Bad Neustadt / Saale

## Terminal einer Datenverarbeitungsanlage

Die Erfindung betrifft ein Terminal einer Datenverarbeitungsanlage mit Bildschirm, das eine alphanumerische Tastatur und eine Steuereinrichtung für ein Markierungszeichen (Cursor) aufweist, das auf diejenige Bildschirmzeichenstelle rückt, an der die Tastatur die nächste Änderung vornimmt, und das von der Steuereinrichtung auf dem Bildschirm versetzbar ist.

Bei der Textverarbeitung wird bekanntlich mit einem Cursor gearbeitet, der sich auf dem Bildschirm beispielsweise als Unterstreichung oder helligkeitsinverse Markierung darstellt. Der Cursor bewegt sich in diskreten Schritten von Bildschirmzeichenstelle zu Bildschirm-

- 2 -

- 2 -

zeichenstelle einer Zeile in x-Richtung. In y-Richtung
wandert er von Zeile zu Zeile. Ist auf eine Bildschirmzeichenstelle mittels der Tastatur ein Zeichen eingegeben, rückt der Cursor auf die nächste Zeichenstelle,
die für die nächste Änderung, wie beispielsweise Eingabe
oder Korrektur, vorgesehen ist. Um den Cursor an eine
beliebige Bildschirmzeichenstelle, beispielsweise zur
Löschung oder Korrektur des dortigen Zeichens, bringen
zu können, weist die Tastatur mehrere Cursortasten auf,
mit denen eine Vorwärts-, Rückwärts-, Abwärts- bzw.
Aufwärts-Steuerung des Cursors möglich ist. Soll der
Cursor von einer Stelle, an der er gerade steht, an
eine diagonal entfernte Stelle gebracht werden, dann
muß er schrittweise durch Betätigen der Vorwärts- bzw.
Rückwärts-Tasten und der Aufwärts- bzw. Abwärts-Tasten
dorthin gerückt werden. Dieser Vorgang ist umständlich
und zeitraubend. Auch eine Auslegung der Cursortasten
als Dauerfunktionstasten führt zu keiner entscheidenden
Verbesserung.

Bei Datenverarbeitungsanlagen, die auch für graphische
Darstellungen geeignet sind, erfolgt die Ansteuerung
einer Bildschirmzeichenstelle mittels eines Steuerhebels
(Joy-sticks). Dabei entspricht der Lauf eines Bezugssymbols auf dem Bildschirm der Richtung der Hebelverschwenkung. Dies hat gegenüber der Tastensteuerung des
Cursors den Vorteil, daß eine Grobpositionierung des
Bezugssymbols auf dem Bildschirm schneller erfolgen kann
als bei einer Tastensteuerung. Eine Feinpositionierung
auf eine ganz bestimmte Bildschirmzeichenstelle ist

- 3 -

- 3 -

jedoch schwierig. Für Fälle, in denen häufig eine Feinpositionierung vorgenommen werden muß, ist ein Joy-stick
nicht geeignet.

Es ist auch bekannt, den Steuerhebel durch eine Steuerkugel zu ersetzen, die in einem Lager frei drehbar
gelagert ist und über Reibräder mit Inkrementalgebern
für die x- und die y-Richtung gekoppelt ist. Bei dieser
Anordnung ist die Bedienbarkeit einfacher als bei einem
Steuerhebel. Jedoch ist diese Anordnung teuer. Außerdem
ist auch hier die Geschwindigkeit, mit der von einer
Zeichenstelle zu einer beabstandeten Zeichenstelle
gefahren werden kann, niedrig.

In der US-PS 2 527 835 ist eine Kontaktplatte mit einer
flächigen Widerstandsschicht und einem Handgriffel
beschrieben. An gegenüberliegende Seiten der flächigen
Widerstandsschicht sind Spannungen verschiedener
Frequenzen gelegt. Mit dem Griffel ist eine seiner
x-y-Position auf der Widerstandsschicht entsprechende
Teilspannung abzugreifen. Über die Teilspannungen wird
ein Elektronenstrahl ausgelenkt. Ein Terminal der eingangs genannten Art ist hier nicht vorgesehen.

In der DE-OS 29 09 847 ist eine Einrichtung zur Eingabe
der Position eines Kontaktstiftes in eine Datenerfassungsvorrichtung beschrieben. Mit dieser Einrichtung
sollen bestimmte Regionen eines über einen Bildschirm
wiedergegebenen Röntgenbildes markiert werden. Um durch
Prellungen verursachte Übertragungsstörungen zu

- 4 -

beseitigen, weist der Kontaktstift ein manuell zu betätigendes Schaltglied auf. Ein Terminal der eingangs genannten Art ist auch hier nicht angesprochen.

Aufgabe der Erfindung ist es, eine Einrichtung der eingangs genannten Art so auszubilden, daß der Cursor für eine Dateneingabe an einer von seiner jeweiligen Zeichenstelle entfernten Zeichenstelle manuell schnell und sicher an diese Zeichenstelle gesetzt werden kann.

Erfindungsgemäß ist obige Aufgabe bei einer Einrichtung der eingangs genannten Art dadurch gelöst, daß die Steuereinrichtung eine Kontaktplatte mit einer flächigen Widerstandsschicht und einen Handgriffel aufweist, mit dem auf der Widerstandsschicht seiner jeweiligen x-y-Position entsprechende Teilspannungen abgegriffen werden, daß ein Analog/Digital-Wandler vorgesehen ist, der die Teilspannungen in digitalisierte Koordinatenwerte umsetzt, und daß ein Schaltglied vorgesehen ist, auf dessen Betätigung das Markierungszeichen auf dem Bildschirm an der den Koordinatenwerten entsprechenden Stelle erscheint.

Will der Benutzer den Cursor versetzen, dann setzt er den Griffel auf der Widerstandsschicht in den Bereich, der örtlich etwa der gewünschten Cursorstellung entspricht, und bedient das Schaltglied. Der Cursor erscheint nun in entsprechender Stellung auf dem Bildschirm und kann bei Betrachtung des Bildschirms mittels des Griffels auf die gewünschte Zeichenstelle geführt werden. Der Benutzer muß also nicht - wie dies bei den eingangs beschriebenen Cursortasten, dem Steuerhebel und der Steuerkugel notwendig ist - alle möglichen Cursorpositionen zwischen der Zeichenstelle, auf der der Cursor steht bis zu der Zeichenstelle, auf der der Cursor stehen soll, auf einer Linie durchfahren. Dadurch ist die Geschwindigkeit der Cursorverstellung beträchtlich erhöht. Ein exaktes Erreichen der gewünschten Cursorstellung ist möglich, da der Griffel auf der Kontaktplatte feinfühlig geführt werden kann.

Die erfindungsgemäße Steuereinrichtung kann die üblichen Cursortasten ersetzen. Sie kann jedoch auch zusätzlich zu diesen vorgesehen sein. Es sind dann vorzugsweise die Cursortasten wirksam geschaltet, wenn das Schaltglied bzw. der Griffel unbetätigt sind. Der Benutzer hat die Möglichkeit den Cursor entweder mittels der Cursortasten oder mittels des Griffels zu versetzen. Zur Vereinfachung der Cursortastatur kann es dann günstig sein, die Anzahl der Cursortasten zu verringern. Die Funktion der entfallenden Cursortasten übernimmt die Steuereinrichtung. Steht beispielsweise die Korrekturmöglichkeit einer eben getätigten Eingabe im Vordergrund, dann kann es genügen, nur eine in den Zeilen wirksame Rückwärts-Cursortaste vorzusehen.

Vorzugsweise erscheint der Cursor auf dem Bildschirm, solange der Griffel auf der Widerstandsschicht geführt ist. Damit ist für den Benutzer der direkte Bezug zwischen der Griffelbewegung und der Cursorversetzung deutlich.

In bevorzugter räumlicher Ausgestaltung der Erfindung
ist die Steuereinrichtung im Gehäuse der Tastatur neben
dieser angeordnet. Vorzugsweise ist für den Griffel am
Gehäuse eine Steckhülse ausgebildet. Damit kann das
gesamte Eingabeterminal als Baueinheit gefertigt werden,
das mittels einer einzigen Steckverbindung an den Bus
der Datenverarbeitungsanlage angeschlossen werden kann.

Um dem Benutzer die auf den Bildschirm bezogene Orientierung auf der Widerstandsschicht zu erleichtern, entspricht diese in ihrem Format dem Bildschirm. In ihrer
Fläche ist sie jedoch kleiner als die Bildschirmfläche.
Damit ist es möglich, die Kontaktplatte ergonomisch
günstig in das Gehäuse zu integrieren. Der Benutzer kann
beim Führen des Griffels über die Widerstandsschicht die
Hand auf der Widerstandsschicht oder in deren Umgebung
auf dem Gehäuse auflegen. Eine sichere Griffelführung
ist damit gewährleistet.

Vorzugsweise ist das Schaltglied durch einen Kontakt an
der Steckhülse oder am Griffel ausgebildet. Damit benötigt der Benutzer zur Betätigung des Schaltgliedes keine
zweite Hand.

Das erfindungsgemäße Terminal eignet sich insbesondere
für solche Datenverarbeitungsanlagen, die für die Textverarbeitung ausgelegt sind. Das Terminal eignet sich
auch für solche Kleincomputer, die für Graphik-Darstellung ausgelegt sind. Denn mit der Steuereinrichtung ist eine einfache Graphik-Eingabe möglich, ohne

- 7 -

daß dies das Terminal entscheidend verteuert.

Weitere vorteilhafte Ausgestaltungen der Erfindung
ergeben sich aus der folgenden Beschreibung eines Ausführungsbeispiels und den Unteransprüchen. In der
Zeichnung zeigen:

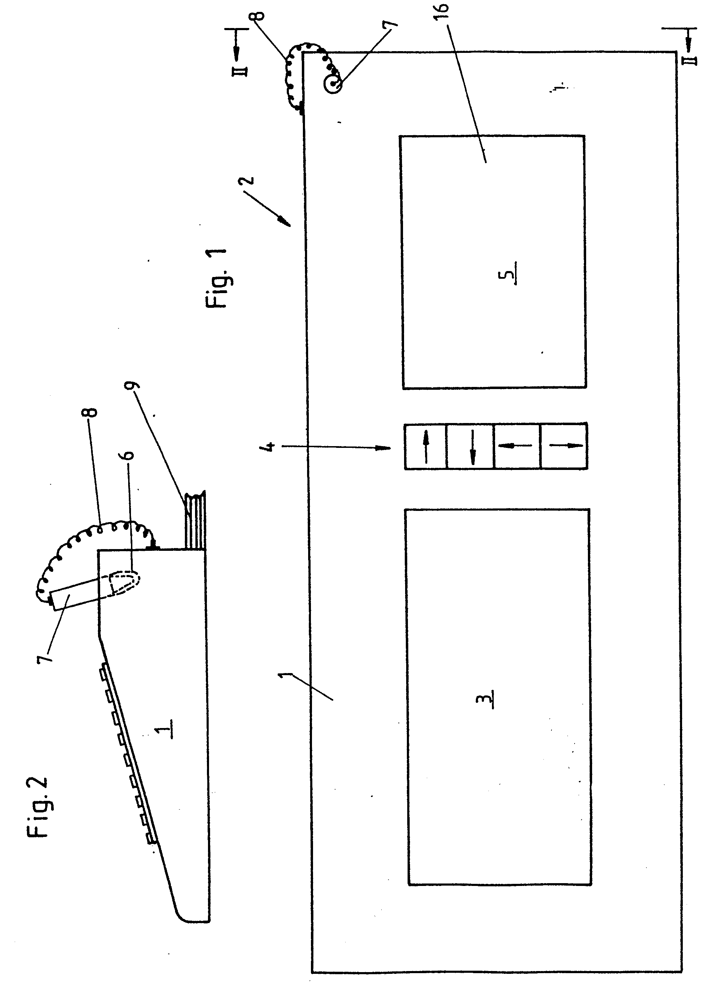

Figur 1    die Aufsicht eines Terminals einer Datenverarbeitungsanlage,

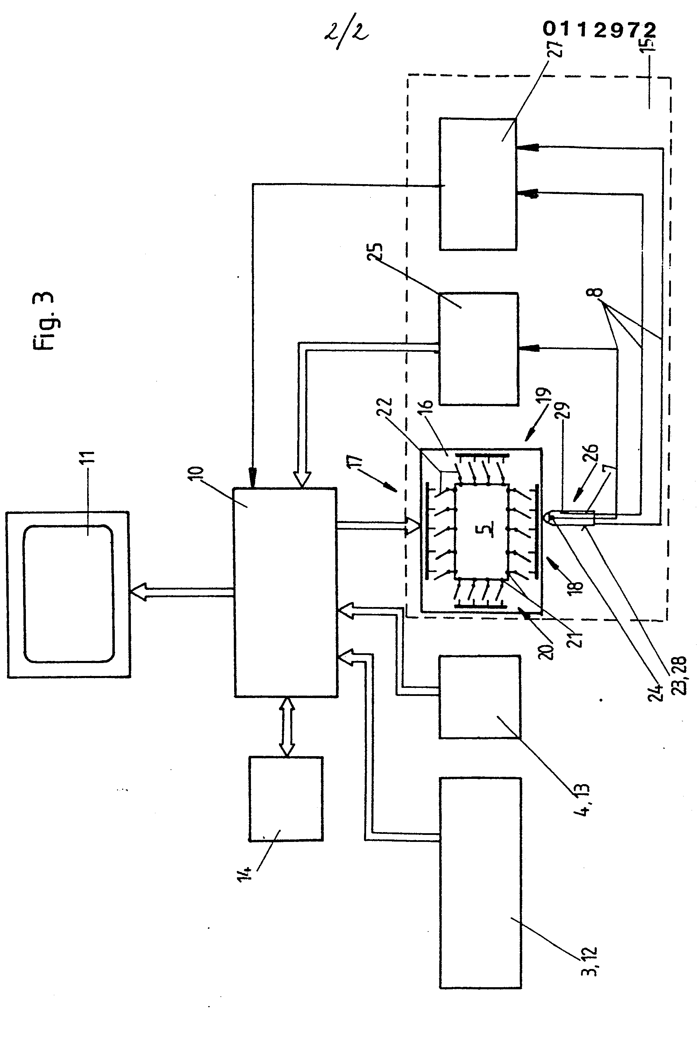

Figur 2    eine Seitenansicht des Terminals und

Figur 3    ein Schaltbild des Terminals der Datenverarbeitungsanlage.

An einem Gehäuse 1 eines Terminals 2 ist eine ASCII-
Tastatur 3, eine Reihe von Cursortasten 4 und eine
flächige Widerstandsschicht 5 angeordnet. An dem
Gehäuse 1 ist eine Hülse 6 für einen Griffel 7 vorgesehen, der mittels eines Spiralkabels 8 angeschlossen
ist.

Mit einem Flachkabel 9 ist das Terminal 2 elektrisch
mit einem Mikrocomputer 10 verbunden. An diesen ist
ein Bildschirm 11 angeschlossen.

Die Widerstandsschicht 5 weist das gleiche Format auf,
wie der Bildschirm 11. Sie ist jedoch in ihrer Fläche kleiner als dieser, wobei ihre Höhe etwa der Höhe der Tastatur 3 gleich ist.

An den Mikrocomputer 10 sind die ASCII-Tastatur 3 über einen Encoder 12 und die Cursortasten 4 über einen Encoder 13 angeschlossen. Der Mikrocomputer 10 weist ein Cursorregister 14 auf, welches jeweils diejenige Stelle des Bildschirms 11 festhält, welche über die ASCII-Tastatur 3 mit einem Zeichen belegt wurde, worauf dann der Cursor die nächst einzugebende Bildschirmstelle markiert. Mittels der Cursortasten 4 ist der Cursor auf dem Bildschirm 11 schrittweise zu versetzen, so daß vom Benutzer diejenige Zeichenstelle aufgesucht werden kann, an der - außerhalb des normalen Cursorfortlaufs - eine korrigierende oder ergänzende Eingabe über die ASCII-Tastatur 3 erfolgen soll.

Die Widerstandsschicht 5 und der Griffel 7 sind Bestandteile einer in dem Gehäuse 1 untergebrachten Steuereinrichtung 15. Die Widerstandsschicht 5 ist auf eine Kontaktplatte 16 aufgebracht. Die Widerstandsschicht 5 ist an ihren vier Seiten mit Elektrodenanordnungen 17, 18 sowie 19, 20 versehen. Jede Elektrodenanordnung weist in einer Reihe eine Mehrzahl von Punktelektroden 21 auf. Den Punktelektroden sind elektronische Halbleiterschalter 22 vorgeschaltet. Diese sind von dem Mikrocomputer 10 so geschaltet, daß zyklisch die Halbleiterschalter 22 der Elektrodenanordnungen 17 und 18 geschlossen und gleichzeitig die Halbleiterschalter 22 der Elektrodenanordnungen 19 und 20 geöffnet werden. Die Halbleiter-

- 9 -

schalter 22 legen damit die gegenüberliegenden Punktelektroden 21 abwechselnd an eine Gleichspannung, welche in der Widerstandsschicht 5 ein Potentialfeld in x-Richtung und abwechselnd in y-Richtung aufbaut. Dadurch, daß die geöffneten Halbleiterschalter 22 die in einer Reihe liegenden Punktelektroden 21 der Elektrodenanordnungen 17 und 18 bzw. 19 und 20 voneinander potentialmäßig entkoppeln, wird ein linearer und paralleler Verlauf der Äquipotentiallinien in der Widerstandsschicht 5 erreicht.

Der Griffel 7 weist eine gegenüber seinem Außenmantel 23 elektrisch isolierte Griffelspitze 24 auf. Diese ist über das Kabel 8 mit einem Analog/Digital-Wandler 25 verbunden. Dieser ist über das Flachkabel 9 an den Mikrocomputer 10 angeschlossen. Als Wandler 25 eignet sich der Baustein AD 574 A der Fa. Analog Devices, der ein Mikroprozessor-Interface aufweist, so daß er unmittelbar mit dem Mikrocomputer 10 verbunden werden kann. Ist der Griffel 7 mit seiner Spitze 24 auf die Widerstandsschicht gesetzt, dann liegt an ihr abwechselnd eine der jeweiligen x- bzw. y-Koordinate der Griffelstellung entsprechende Teilspannung an. Der Wandler 25 digitalisiert diese Gleichspannungen, wobei der die Halbleiterschalter 22 steuernde Mikrocomputer 10 erkennt, ob es sich um einen x- oder um einen y-Koordinatenwert handelt.

Durch die Handhabung des Griffels 7 wird ein Schaltglied 26 betätigt, dem eine Auswerteschaltung 27, insbesondere ein Schmitt-Trigger, nachgeschaltet ist, welche ebenfalls über das Flachkabel 9 an dem Mikrocomputer 10 angeschlossen ist. Bei einem Schalten der Auswerteschaltung 27 infolge einer Handhabung des Griffels 7 werden die Cursortasten 4 bzw.

- 10 -

deren Encoder 13 vom Cursorregister 14 getrennt und
diesem werden vom Mikrocomputer 10 die Daten des
Wandlers 25 zugeführt.

Das Schaltglied 26 kann aus einer elektrisch leitenden
Hülle 28 des Griffels 7 und einer dieser gegenüber
elektrisch isolierten Sensor-Fingerelektrode 29 des
Griffels 7 bestehen. Hält der Benutzer den Griffel 7
in der Hand und tippt er mit dem Zeigefinger auf die
Fingerelektrode 29, dann spricht die Auswerteschaltung 27 an.

Das Schaltglied 26 kann auch ein am Griffel 7 angeordneter, elektromechanischer Tastschalter sein.

Es ist auch möglich, daß das Schaltglied 26 in die
Hülse 6 in der Weise integriert ist, daß es die Auswerteschaltung 27 durchschaltet, sobald der Griffel 7
aus der Hülse 6 entnommen wird.

Die Funktionsweise der beschriebenen Steuereinrichtung 15
ist etwa folgende:

Will der Benutzer den Cursor auf dem Bildschirm 11 versetzen, dann nimmt er den Griffel 7 auf und setzt ihn
in einen Bereich der Widerstandsschicht 5, in dessen
entsprechenden Bereich er den Cursor auf dem Bildschirm 11 sehen möchte. Durch die Betätigung des Schaltgliedes 26 werden die digitalisierten Koordinatenwerte
der jeweiligen x-y-Position der Griffelspitze 24 in das Cursorregister 14 eingegeben, wobei dessen vorhergehender Inhalt gelöscht wird. Danach erscheint auf dem
Bildschirm 11 der Cursor örtlich an einer der Stellung
der Griffelspitze 24 auf der Widerstandsschicht 5 entsprechenden x- und y-Position. Der Cursor muß also
nicht schrittweise in diese Position geführt werden.

Es ist davon auszugehen, daß der Benutzer nicht auf
Anhieb auf der Widerstandsschicht 5 die der gewünschten
Cursorstellung auf dem Bildschirm 11 entsprechende
Stelle trifft. Der Benutzer kann ausgehend von der
getroffenen Stelle eine Feinpositionierung zur gewünschten Stelle dadurch durchführen, daß er unter gleichzeitiger Beobachtung des Verrückens des Cursors auf dem
Bildschirm 11 den Griffel 7 auf der Widerstandsschicht 5
verschiebt, bis tatsächlich der Cursor am Bildschirm 11
die gewünschte Zeichenstelle erreicht hat.

Danach legt der Benutzer den Griffel 7 ab bzw. betätigt
erneut das Schaltglied 26 und gibt über die Tastatur 3
das an dieser Bildschirmstelle notwendige Zeichen ein.

Arbeitet der Mikrocomputer 10 mit einem auf Graphik-
Darstellung ausgelegten Programm, dann kann mittels der
Steuereinrichtung 15 eine Graphikeingabe in der Weise
erfolgen, daß mit dem Griffel 7 auf die Widerstandsschicht 5 gezeichnete Linien oder Punkte im Mikrocomputer 10 weiterverarbeitet werden und der Bildschirm 11
die entsprechende Darstellung vornimmt.

Durch die beschriebene Linearisierung der Äquipotentiallinien auf der Widerstandsschicht 5 ist erreicht, daß
sich auf die Widerstandsschicht 5 gezeichnete Gerade als
Gerade - abgesehen vom Zeilensprung - darstellen. Außerdem ist erreicht, daß eine Bewegung des Griffels 7 um
eine Streckeneinheit auf der Widerstandsschicht 5 unabhängig von dem Ort der Verschiebung auf der Widerstandsschicht 5 zu einer ortsunabhängig gleichen Versetzung
des Cursors bzw. eines anderen Symbols auf dem Bildschirm 11 führt. Beides ist für eine Graphik-Darstellung
und für die Feinpositionierung des Cursors vorteilhaft.
Denn es könnte auch bei der Feinpositionierung des Cursors
verwirrend wirken, wenn eine gewisse Griffelverschiebung
abhängig von Richtung und Ort zu unterschiedlichen Cursorversetzungen führt oder eine geradlinige Griffelverschiebung eine auf einer Kurve liegende Cursorversetzung
zur Folge hätte. Bei der Grobpositionierung des Cursors
spielt der Verlauf der Äquipotentiallinien auf der
Widerstandsschicht 5 eine untergeordnete Rolle. Denn bei
dieser wird die endgültig gewünschte Stellung des Cursors
im Regelfall nicht erreicht.

Ansprüche

1. Terminal einer Datenverarbeitungsanlage mit Bildschirm, das eine alphanumerische Tastatur und eine Steuereinrichtung für ein Markierungszeichen (Cursor) aufweist, das auf diejenige Bildschirmzeichenstelle rückt, an der die Tastatur die nächste Änderung vornimmt, und das von der Steuereinrichtung auf dem Bildschirm versetzbar ist, dadurch gekennzeichnet, daß die Steuereinrichtung (15) eine Kontaktplatte (16) mit einer flächigen Widerstandsschicht (5) und einen Handgriffel (7) aufweist, mit dem auf der Widerstandsschicht (5) seiner jeweiligen x-/y-Position entsprechende Teilspannungen abgegriffen werden, daß ein Analog/Digital-Wandler (25) vorgesehen ist, der die Teilspannungen in digitalisierte Koordinatenwerte umsetzt und daß ein Schaltglied (26) vorgesehen ist, auf dessen Betätigung das Markierungszeichen auf dem Bildschirm (11) an der den Koordinatenwerten entsprechenden Stelle erscheint.

2. Terminal mit mehreren Cursortasten zur Steuerung des Cursors jeweils in bestimmter Richtung, dadurch gekennzeichnet, daß die Cursortasten (4) wirksam geschaltet sind, wenn das Schaltglied (26) bzw. der Griffel (7) unbetätigt sind.

3. Terminal nach einem der vorhergehenden Ansprüche, dadurch gekennzeichnet, daß der Cursor auf dem Bildschirm (11) erscheint, solange der Griffel (7) auf der Widerstandsschicht (5) geführt ist.

- 2 -

4.      Terminal nach einem der vorhergehenden Ansprüche,
dadurch gekennzeichnet, daß die Koordinatenwerte auf
die Betätigung des Schaltgliedes (26) einem Cursorregister (14) zugeführt sind und aus diesem ständig
ausgelesen und auf den Bildschirm (11) übertragen sind.

5.      Terminal nach einem der vorhergehenden Ansprüche,
dadurch gekennzeichnet, daß das Schaltglied (26) durch
einen Kontakt einer Steckhülse (6) gebildet ist, der
durch den abgelegten Griffel (7) bzw. den entnommenen
Griffel (7) betätigt ist.

6.      Terminal nach einem der vorhergehenden Ansprüche
1 bis 4, dadurch gekennzeichnet, daß das Schaltglied (26)
durch einen Kontakt (28, 29) am Griffel (7) gebildet ist.

7.      Terminal nach Anspruch 6, dadurch gekennzeichnet,
daß das Schaltglied (26) durch eine metallische Hülle (28)
des Griffels (7) und eine dieser gegenüber isolierte
Fingerelektrode (29) gebildet ist.

8.      Terminal nach Anspruch 6, dadurch gekennzeichnet,
daß das Schaltglied (26) von einem am Griffel (7) angeordneten elektromechanischen Taster gebildet ist.

9.      Terminal nach einem der vorhergehenden Ansprüche,
dadurch gekennzeichnet, daß die Steuereinrichtung (15)
zur Darstellung graphischer Muster auf dem Bildschirm (11)
eingesetzt ist.

10. Terminal nach einem der vorhergehenden Ansprüche, dadurch gekennzeichnet, daß die Widerstandsschicht (5) in ihrem Format dem Bildschirm (11) entspricht, in ihrer Fläche jedoch kleiner als die Bildschirmfläche ist.

11. Terminal nach einem der vorhergehenden Ansprüche, dadurch gekennzeichnet, daß die Widerstandsschicht (5) der Steuereinrichtung (15) im Gehäuse der Tastatur (3) neben dieser angeordnet ist.

12. Terminal nach Anspruch 11, dadurch gekennzeichnet, daß am Gehäuse eine Steckhülse (6) für den Griffel (7) ausgebildet ist.

13. Terminal nach einem der vorhergehenden Ansprüche, dadurch gekennzeichnet, daß je zwei gegenüberliegende Elektrodenanordnungen (17, 18; 19, 20) der Widerstandsschicht (5) abwechselnd an Gleichspannung gelegt sind.

14. Terminal nach Anspruch 13, dadurch gekennzeichnet, daß jede der vier Elektrodenanordnungen (17 bis 20) mehrere Punktelektroden (21) aufweist, deren Potentiale im gesperrten Zustand von sie an die Gleichspannung legenden Halbleiterschaltern (22) gegeneinander gekoppelt sind.

Fig. 2

Fig. 1

0112972

1/2

Fig. 3

**0112972**
Nummer der Anmeldung

EP 83 10 9610

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | COMPUTER, Band 11, Nr. 11, November 1978, Seiten 9-18, Long Beach, US M. OHLSON: "System design considerations for graphics input devices" * Figuren 1-3; Tafel 1; Seite 10, linke Spalte, Zeile 33 - Seite 11, rechte Spalte, Zeile 12; Seite 12, rechte Spalte, Zeilen 19-32; Seite 13, rechte Spalte, Zeilen 18-23; Seite 15, rechte Spalte, Abschnitt: "Buttons" * | 1,6,9 | G 06 K 11/06 G 06 F 3/03 |
| Y | COMPUTER --- | 2,3,4, 8,13, 14 | |
| Y | ELECTRONIC PROGRESS, Band 18, Nr. 2, Sommer 1976, Seiten 15-22, Raytheon Company, Lexington, Ma., US A.C. BORDOGNA et al.: "The RAYCOMP-100 a video page composition terminal" * Figuren 2,7; Seite 16 - Seite 18, rechte Spalte, Zeile 9 * --- -/- | 2,3,4 | |

RECHERCHIERTE SACHGEBIETE (Int. Cl. ³)

G 06 K
G 06 F

Der vorliegende Recherchenbericht wurde für alle Patentansprüche erstellt.

| Recherchenort | Abschlußdatum der Recherche | Prüfer |
|---|---|---|
| DEN HAAG | 01-03-1984 | BECKER K.H. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 798 370 (GEORGE S. HURST) <br> * Figuren 1,3,8; Spalte 1, Zusammenfassung; Spalte 3, Zeile 51 - Spalte 4, Zeile 6; Spalte 6, Zeilen 61-66; Spalte 9, Zeilen 20-28 * <br><br> --- | 3,4,8, 13,14 | |
| Y | GB-A-2 087 611 (OXFORD COMPUTING LIMITED) <br> * Figur 6; Zusammenfassung; Seite 2, Zeilen 71-92 * <br><br> --- | 14 | |
| X | DISPLAYS, Band 1, Nr. 2, Juli 1979, Seiten 83-93, Surrey, GB D.J. GROVER: "Graphics tablets - a review" * Seiten 83-85; Seite 91, Abschnitt: "ALTERNATIVE INTERACTION METHODS", vom Anfang - rechte Spalte, Zeile 6 von unten * <br><br> --- | 1,9 | RECHERCHIERTE SACHGEBIETE (Int. Cl. ³) |
| A | US-A-4 071 689 (TALMAGE et al.) <br><br> * Zusammenfassung; Figuren 1,2; Spalte 5, Zeilen 24-61 * <br><br> --- | 1,9,13 ,14 | |
| A | DE-A-2 938 426 (HOFFMANN et al.) <br> * Figur; Seite 6, Zeile 20 - Seite 7 * <br><br> ----- | 1,11 | |

Der vorliegende Recherchenbericht wurde für alle Patentansprüche erstellt.

| Recherchenort | Abschlußdatum der Recherche | Prüfer |
|---|---|---|
| DEN HAAG | 01-03-1984 | BECKER K.H. |